Europäisches Patentamt

(19) European Patent Office    (11) Publication number: **0 222 659**
**B1**
Office européen des brevets

(12) **EUROPEAN PATENT SPECIFICATION**

(45) Date of publication of the patent specification:    (51) Int. Cl.⁴: **F16D 65/60**
07.03.90

(21) Application number: **86402423.7**

(22) Date of filing: **29.10.86**

(54) Automatic slack adjuster.

(30) Priority: **13.11.85 US 797540**

(43) Date of publication of application:
**20.05.87 Bulletin 87/21**

(45) Publication of the grant of the patent:
**07.03.90 Bulletin 90/10**

(84) Designated Contracting States:
**DE ES FR GB IT SE**

(56) References cited:
**EP-A- 0 020 128**
**EP-A- 0 145 322**
**EP-A- 0 145 947**
**GB-A- 1 025 399**
**GB-A- 1 091 662**
**GB-A- 2 123 500**
**US-A- 3 901 357**
**US-A- 4 019 612**
**US-A- 4 380 276**

(73) Proprietor: **ALLIED-SIGNAL INC. (a Delaware
corporation), Columbia Road and Park Avenue P.O.
Box 2245R, Morristown New Jersey 07960(US)**

(72) Inventor: **Heidmann, Kurt Richard Allied Corporation,
401 N.Bendix Dr. P.O. Box 4001, South Bend,
IN 46634(US)**
Inventor: **Wolfli, Clyde Roy Allied Corporation,
401 N.Bendix Dr. P.O. Box 4001, South Bend,
IN 46634(US)**

(74) Representative: **Turner, Alan Reginald, BENDIX LIMITED
Douglas Road, Kingswood, Bristol BS15 2NL(GB)**

## Description

This invention relates to an automatic slack adjuster for a vehicle braking system.

Heavy duty vehicles are commonly equipped with cam-actuated drum brakes which are operated by a compressed air braking system. The cam-actuated brakes include a cam which is mounted on a rotatable shaft which extends from the brake. The cam forces the brake shoes into braking engagement with a rotating drum. To effect a brake actuation, the drive shaft upon which the cam is mounted must be rotated. Accordingly, a lever housing, commonly known as a "slack adjuster", is mounted on the drive shaft to transmit linear motion generated from a pneumatic cylinder operated by the compressed air system into rotary motion of the drive shaft. Since the initial or brake release position of the cam must be indexed to compensate for lining wear, the slack adjuster includes a mechanism to rotate the drive shaft relative to the slack adjuster housing, to thereby maintain the clearance between the brake shoes and the drum when brakes are released within a predetermined limit during the life of the linings.

One automatic slack adjuster that has been proposed is that of United States Patent Number 4 019 612 which uses an adjusting link connected through a lost motion linkage to a rack reciprocally moveable in a blind hole of the adjuster housing, the rack radially inwardly facing and engaging peripheral teeth of a pinion. The pinion drives a worm gear to make appropriate adjustments when stroking exceeds more than a normal predetermined clearance. The lost motion linkage is a desirable but additional complication and this arrangement leaves much to be desired having regard for ease of manufacture and assembly in production quantities.

It is, of course, desirable to effect the aforementioned adjustment automatically, so that the clearance between the shoes of the brake drum is automatically maintained during the life of the linings.

A further automatic slack adjuster is disclosed in U.S. Patent 4 380 276, issued on April 19, 1983 to Sweet et al. This slack adjuster design uses an adjusting link which reciprocates within the adjuster housing when the slack adjuster is operated. The link is connected to a worm gear through a drive member which is connectable with a worm gear to rotate the latter. The worm gear is connected to index the angular position of the drive shaft relative to the slack adjuster housing. However, the design disclosed in this patent presents a number of difficulties arising from the adjusting link being offset axially from a drive tooth and precise positioning is required during assembly to line up the tooth with a slot that receives it. Accordingly, this slack adjuster also leaves much to be desired in production and assembly.

According to the present invention, there is provided an automatic slack adjuster for a vehicle brake actuated by a rotating drive shaft comprising a lever housing, means mounting said lever housing on said drive shaft to effect rotation of the latter in a brake application effecting directing upon stroking the lever housing, an adjustment shaft rotatably mounted in said lever housing and drivingly connected with the drive shaft to rotate the latter relative to the lever housing to effect brake adjustment, a toothed pinion rotatably mounted on said adjustment shaft, a rack engaging with a rack surface, radially inwardly facing and engaging the toothed pinion and mounted for reciprocation relative to said lever housing, means pivotally linking the rack with the lever housing for causing said reciprocation and thereby rotation of said pinion, and coupling means for drivingly connecting said pinion with the adjustment shaft when the latter is rotated in a brake adjustment effecting direction, said pinion including a plurality of gear teeth spaced substantially equally around the periphery of the pinion, characterized in that said rack includes a pair of recesses which respectively receive two adjacent pinion teeth with clearances between the teeth and the recesses whereby the rack is permitted to move relative to the teeth over a predetermined clearance distance without rotating the pinion.

The present invention will now be further described by way of example, with reference to the accompanying drawings of which:

Figure 1 is a side elevational view, partly in section, of a slack adjuster made pursuant to the teachings of the present invention; and

Figure 2 is a cross sectional view taken substantially along lines 2-2 of Figure 1.

The automatic slack adjuster as generally indicated by the numeral 10 includes a lever housing 12 which is connected to a yoke assembly 14 through a conventional pivot connection 16. End 18 of yoke assembly 14 is adopted for connection to a push rod operated by a conventional pneumatic actuator (not shown). The opposite end 20 is pivotally connected to one end 22 of an articulated adjusting link 24 through a connection 26.

A bore 28 is defined by the housing 12 and rotatably receives a spur gear 30. The inner circumference 32 of the spur gear 30 is provided with splines as at 34 to connect the spur gear 30 with a drive shaft 36 such that rotation of the spur gear 30 will be transmitted to rotate the drive shaft 36. The drive shaft 36 is connected to the cam of the aforementioned drum brake in a manner well known to those skilled in the art. Details of the connection of the drive shaft 36 to the aforementioned drum brake and the manner in which the rotation of the drive shaft 36 actuates the drum brake are disclosed in the aforementioned U.S Patent 4 380 276. Since such details are conventional and form no part of the present invention, they will not be discussed herein.

The lever housing 12 is further provided with a cross bore 38 which intersects the bore 28. Cross bore 38 terminates in a reduced diameter portion 40 into which an annular insert 42 is force fitted. One end 44 of a shaft 46 upon which a worm 48 is fixed is rotatably mounted in the reduced diameter portion 40 of the cross bore 38. The worm 48 is meshed with the teeth of the gear 30, so that rotation of the worm shaft 46 and worm 48 effects rotation of the gear 30. As will be discussed hereinafter, rotation of the worm shaft 46 in this manner effects adjustment of the brake, so that the worm shaft 46 is hereinafter sometimes referred to as the "adjustment shaft". The opposite end 50 of the worm or adjustment shaft 46 is rotatably supported in a closure member 52 which is retained in the open end of the bore 38 by a conventional retaining ring 54. The end 50 of the shaft 46 terminates in a conventional hex head 56 so that an appropriate tool may be applied thereto to manually rotate the shaft 46 to thereby manually effect rotation of the brakes. End 44 of the adjustment or worm shaft 46 is counterbored as at 58. A clutch spring 60 is received within the sleeve 42 and the counterbore 58.

A pinion 62 is rotatably mounted on the adjustment or worm shaft 46 and includes an axially extending sleeve portion 64 which projects from the tooth portion 66 of the pinion 62 towards the worm 48. Another sleeve 68 is fixed to the worm or adjustment shaft 46 and is disposed between the end of the axially projecting sleeve portion 64 of pinion 62 and the worm 48. Another clutch spring 69 is wound around the sleeve portion 64 of the pinion 62 and the sleeve 68. The clutch springs 60, 69 are similar and are described in detail in the aforementioned U.S. Patent 3,901,357. The springs 60 and 69 are conventional coil springs, but use wire having a square cross section.

The springs 60, 69 are wound such that when they are torqued in the clockwise direction, which is the direction the shaft 46 is turned to effect adjustment of the brake, the inner and outer diameters of the springs 60, 69 become smaller. Accordingly, when torqued in the clockwise direction, the spring 69 grips the sleeves 64, 68 more tightly, thereby providing a driving connection between the pinion 62 and the worm or adjustment shaft 46. Similarly, the outer diameter of the spring 60 also shrinks, thereby relieving the force tending to couple the worm shaft 46 to the sleeve 42 due to the spring force of the spring exerted thereagainst. Conversely, when the pinion is torqued in the counterclockwise direction, the inner diameter of the spring 69 grows slightly, thereby relieving the force tending to couple the sleeve portion 64 with the sleeve 68, and thereby permitting the pinion 62 to slip relative to the worm or adjustment shaft 46. Similarly, when the worm shaft 46 is torqued in the counterclockwise direction, the outer diameter of the spring 60 grows, thereby gripping the adjustment shaft 46 and the sleeve 42 more tightly, to thereby provide a force tending to resist rotation of the worm or adjustment shaft 46 relative to the housing 12.

The toothed portion 66 of the pinion 64 is provided with teeth 70 spaced substantially equally about the periphery of the toothed portion 66. The teeth 70 are involute teeth in which the sides are in the shape of an involute curve such that the portion 72 of the teeth that joins with the pinion 62 are the thickest portion of the teeth and, therefore, the strongest.

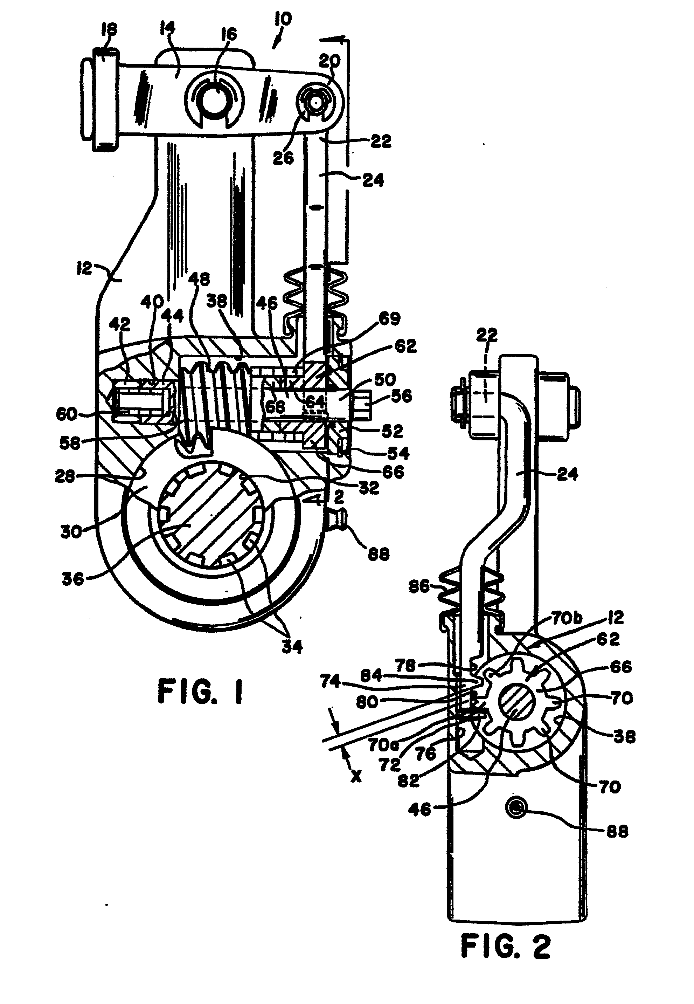

The end of the adjusting link 24 opposite the end 22 terminates in a rack portion 74. Rack portion 74 is slidably received in yet another cross bore 76 which intersects with the bore 38. Rack portion 74 is provided with axially spaced recesses 78, 80 which are adapted to mesh with adjacent teeth 70a, 70b on the pinion 62. The rack portion 74 is in substantially the same axial plane as the pinion 62, but is disposed radially outwardly from the pinion, so that the rack portion 74 and pinion 62 form a conventional rack and pinion actuating arrangement. The thickness of the lower portion 82 of the rack portion 74 is such that it is adapted to fit in the space defined between adjacent teeth 70. The thickness of the portion 84 of the rack defined between the recesses 78, 80 fits between teeth 70a, 70b with a predetermined backlash clearance indicated by the letter X on Figure 2, such that the rack portion 74 can move relative to the pinion 62 for a distance X without the teeth 70a, 70b contacting the end of one of the recesses 78, 80 so that the adjusting link 24 is permitted to move relative to the pinion 62 for the predetermined backlash clearance X. A sealing boot 86 is provided to prevent entry of environmental contaminants into the bore 76, and a conventional grease fitting 88 is provided to lubricate the internal parts of the adjuster 10.

In operation, the aforementioned pneumatic actuator forces the yoke assembly 14 to the right, viewing Figure 1. Movement of the yoke assembly 14 to the right, due to its pivotal connection with the lever housing 12, rotates the latter in a clockwise direction. Because of the splined connection between the gear 30 and the drive shaft 36, rotation of the lever housing 12 also rotated the drive shaft 36, thereby effecting actuation of the aforementioned brake. When the brake is released, the lever housing 12 is returned to its position illustrated in Figure 1, thereby rotating the drive shaft 36 to the brake released portion.

As well known to those skilled in the art, repeated brake applications cause wear of the brake friction linings, thereby requiring that the drive shaft 36 be rotated relative to the housing 12 to thereby index the cam to maintain the proper clearance between the brake drum and brake shoes. Adjustment is effected by rotating the gear 30 relative to the housing by operation of the worm gear 48. As the brake is applied and the housing 12 stroked in the clockwise direction, the adjusting link 24 is urged upwardly, viewing Figures 1 and 2, due to the pivotal connections 16, 26 of the yoke assembly 14 with the lever housing 12 and adjusting link 24 respectively.

Referring to Figure 2, the position of the link 24 is illustrated in the position it assumes at the end of a brake application stroke. Before the brakes were applied, the end 82 of the link 24 was disposed adjacent the lower end of bore 76, viewing Figure 2. In this position, the teeth 70a and 70b were disposed within the recesses 74, 78 respectively, with the upper edges of the teeth, viewing Figure 2, adjacent the corresponding upper edges of the recesses. When the brake is applied, the link 24 is urged upwardly, and first takes up the backlash clearance X, which accommodates the desired brake release clearance between the brake shoes and the drum. After the backlash clearance X is taken up, the teeth 70a, 70b engage the lower edges, viewing Figure 2, of their corresponding recesses 78, 80. As the adjusting link 24 is urged upwardly as the brake is applied, the pinion 62 rotates an incremental amount, due to the engagement of the teeth 70a, 70b with the recesses 78, 80. It will be noted that, since both the teeth 70a and 70b will be acted upon by the edges of the corresponding recesses during the greatest portion of the brake application stroke, the actuating forces are shared between the teeth 70a, 70b thereby reducing the forces applied to any one tooth and reducing the possibility of tooth breakage. The fact that the teeth may be involute tooth with a root section at their juncture with the pinion 62 the thicker part of the tooth also inhibits teeth breakage.

As the pinion is rotated in the clockwise direction, rotation of the pinion is transmitted to the worm or adjustment shaft 46 through clutch spring 69 and the sleeve 68, since rotation of the pinion 62 in the clockwise direction also torques the spring 69 in the clockwise direction, thereby causing the latter to more tightly grip the sleeve portion 64 of pinion 62 and the sleeve 68, to assure a driving connection between the pinion and the worm. At the same time, since the spring 60 is also torqued in the clockwise direction, its coils tend to grip the inner circumferential surface of the counterbore 58 somewhat less tightly, thereby releasing the worm shaft 46 for rotation. Rotation of the worm or adjustment shaft 46 in the clockwise or brake adjustment effecting direction is transmitted through the worm 48 to rotate the gear 30 and, due to the splined connection therewith, to rotate the drive shaft 36. Rotation of the drive shaft 36, as explained hereinabove, effects adjustment of the brake. When brake application forces transmitted back through the spur gear 30 and worm 48 to the worm shaft 46 exceed some relatively high amount, the gripping force of the spring 69 is overcome, even though it is being torqued in the clockwise direction, thereby permitting the spring 69 to slip, to cause the pinion 62 to rotate relative to the worm or adjustment shaft 46. Accordingly, the high actuation forces generated by "panic" brake application, which might result in over-adjustment of the brake, are ignored.

Figure 2 illustrates the position of the drive link 24 at a maximum brake application stroke. Upon release of the brake, the adjustment link 24 first moves downwardly, viewing Figure 2, an amount equal to the backlash clearance X, which represents the brake released clearance between the drum and brake shoes. After the backlash clearance X is taken up, the upper edges, (viewing Figure 2) of the recesses 78, 80 engage the corresponding edges of the gear teeth 70a and 70b, thereby rotating the pinion 62 in the counterclockwise direction upon further downward movement of the adjusting link 24. Counterclockwise movement permits rotation of the pinion 62 relative to the worm or adjustment shaft 46, since the spring 69 is being torqued in the counterclockwise direction, which releases its grip on the sleeve 68, and thereby permits the spring 69 to slip relative to the adjustment shaft 46. At the same time, since the spring 60 is being torqued in the counterclockwise direction, its coils have a tendency to enlarge slightly, thereby gripping the circumferentially surfaces of the counterbore 58 and the sleeve 42 more tightly, thereby resisting counterclockwise rotation of the adjustment or worm shaft 46, to prevent the counterclockwise rotation of the pinion 62 from backing off the adjustment just effected.

Since the rack portion 74 of adjustment link 24 and the pinion 62 define a conventional rack and pinion arrangement, an indefinite number of gear teeth 70 may be provided circumferentially spaced equally about the pinion 62. Accordingly, when the unit is assembled, the angular orientation of the pinion 62 is irrelevant, since it is symmetrical, and any of the teeth 70 may become the teeth 70a and 70b which engage the recesses 78, 80 in the rack section 74 of the adjusting link 24. Furthermore, as explained hereinabove, the actuating stresses, particularly during the adjustment effecting portion of the stroke, are shared between two of the teeth 70a and 70b. As illustrated in the drawing, the tooth 70b moves completely out of the recess 78 only at the very end of the actuating stroke.

## Claims

1. Automatic slack adjuster for a vehicle brake actuated by a rotating drive shaft (36) comprising a lever housing (12), means (30) mounting said lever housing on said drive shaft (36) to effect rotation of the latter in a brake application effecting directing upon stroking the lever housing (12), an adjustment shaft (46) rotatably mounted in said lever housing (12) and drivingly connected with the drive shaft (36) to rotate the latter relative to the lever housing (12) to effect brake adjustment, a toothed pinion (62) rotatably mounted on said adjustment shaft (46), a rack (74) engaging with a rack surface radially inwardly facing and engaging the toothed pinion (62) and mounted for reciprocation relative to said lever housing (12), means (26) pivotally linking the rack (74) with the lever housing (12) for causing said reciprocation and thereby rotation of said pinion (62), and coupling means (64, 68, 69) for drivingly connecting said pinion (62) with the adjustment shaft (46) when the latter is rotated in a brake adjustment effecting direction, said pinion (62) including a plurality of gear teeth (70) spaced substantially equally around the periphery of the pinion (62), characterized in that said rack (74) includes a pair of recesses (78, 80) which respectively receive two adjacent pinion teeth (70) with clearances between the teeth (70) and the recesses (78, 80) whereby the rack (74) is permitted to move relative to the teeth (70) over a predetermined clearance distance without rotating the pinion (62).

2. Automatic slack adjuster as claimed in claim 1, characterized in that the portions of the teeth (70) engaging the rack (74) are in the shape of an involute curve.

3. Automatic slack adjuster as claimed in claim 1, characterized in that said coupling means (64, 68, 69) include a clutch spring (69) connecting the pinion (62) for rotation with the adjustment shaft (46), said clutch spring (69) coupling said pinion (62) to rotate said adjustment shaft (46) when the pinion (62) is rotated to effect brake adjustment until a predetermined torque level is achieved whereupon said clutch spring (69) permits the pinion (62) to rotate relative to the adjustment shaft (46), said clutch spring (69) uncoupling the pinion and the adjustment shaft when the pinion (62) is rotated in the direction opposite to the direction in which brake adjustment is effected.

4. Automatic slack adjuster as claimed in claim 3, characterized in that said pinion (62) includes a sleeve (64) extending axially from the portion of the pinion (62) carrying said teeth (70), and said adjustment shaft (46) carries a complementary sleeve (68), said clutch spring (69) being a coiled spring wrapped around each of said sleeves (64, 68).

5. Automatic slack adjuster as claimed in any of the preceding claims, characterized in that an anti-backoff clutch spring (60) connects the adjustment shaft (46) with the housing (12) to permit rotation of the adjustment shaft (46) in the direction to effect brake adjustment but resisting rotation of said adjustment shaft (46) in the opposite direction.

6. Automatic slack adjuster as claimed in claim 5, characterized in that said anti-backoff clutch spring (60) and the clutch spring (69) connecting the pinion (62) to the adjustment shaft (46) are both coil springs, said anti-backoff clutch spring (60) being wound in a direction opposite the direction in which the clutch spring (69) connecting the pinion to the adjustment shaft (46) is wound.

7. Automatic slack adjuster as claimed in claim 5, characterized in that said adjustment shaft (46) is mounted in a bore (38) defined within said housing (12), one end (44) of said adjustment shaft (46) being supported in a reduced diameter portion (40) of said bore (38), said one end (44) having a counterbore (58), a sleeve (42) mounted in said reduced diameter portion (40) of said bore (38), said anti-backoff clutch spring (60) being mounted in said sleeve (42) and extending into said counterbore (58).

**Patentansprüche**

1. Selbsttätige Spielnachstellvorrichtung für eine Fahrzeugbremse, betätigt durch eine Drehantriebswelle (36), umfassend ein Hebelgehäuse (12), eine Einrichtung (30), welche das Hebelgehäuse an der Antriebswelle (36) anbringt, um Drehung der letzteren in Bremsenanlegerichtung bei Hubbewegung des Hebelgehäuses (12) zu bewirken, einen Nachstellschaft (46), der in dem Hebelgehäuse (12) drehbar angebracht und mit der Antriebswelle (36) antriebsmäßig verbunden ist, um die letztere relativ zu dem Hebelgehäuse (12) zu bewegen, um eine Bremsennachstellung zu bewirken, ein Zahnritzel (62), welches an dem Nachstellschaft (46) drehbar angebracht ist, eine Zahnstange (74) mit einer Zahnstangenfläche radial einwärts, die dem Zahnritzel (62) zugewandt ist und mit diesem im Eingriff steht und für Hin- und Herbewegung relativ zu dem Hebelgehäuse (12) angebracht ist, eine Einrichtung (26) zum schwenkbaren Verbinden der Zahnstange (74) mit dem Hebelgehäuse (12), um die Hin- und Herbewegung und dadurch Drehung des Ritzels (62) hervorzurufen, und eine Kopplungseinrichtung (64, 68, 69) für eine Antriebsverbindung des Ritzels (62) mit dem Nachstellschaft (46), wenn der letztere in Bremsennachstellrichtung gedreht wird, wobei das Ritzel (62) eine Mehrzahl von Getriebezähnen (70) umfaßt, die rund um den Umfang des Ritzels (62) in im wesentlichen gleichen Abständen angeordnet sind, dadurch gekennzeichnet, daß die Zahnstange (74) ein Paar von Ausnehmungen (78, 80) umfaßt, die jeweils zwei benachbarte Ritzelzähne (70) mit Spielräumen zwischen den Zähnen (70) und den Ausnehmungen (78, 80) aufnehmen, wodurch die Zahnstange (74) sich relativ zu den Zähnen (70) über eine vorbestimmte Spielstrecke bewegen kann, ohne das Ritzel (62) zu drehen.

2. Selbsttätige Spielnachstellvorrichtung nach Anspruch 1, dadurch gekennzeichnet, daß die Teile der Zähne (70), die mit der Zahnstange (74) im Eingriff stehen, die Gestalt einer Evolventenkurve haben.

3. Selbsttätige Spielnachstellvorrichtung nach Anspruch 1, dadurch gekennzeichnet, daß die Kopplungseinrichtung (64, 68, 69) eine Kupplungsfeder (69) umfaßt, welche das Ritzel (62) für Drehung mit dem Nachstellschaft (46) verbindet und welche das Ritzel (62) ankoppelt, um den Nachstellschaft (46) zu drehen, wenn das Ritzel (62) für Bremsennachstellung gedreht wird, bis ein vorbestimmter Drehmomentwert erreicht ist, woraufhin die Kupplungsfeder (69) es dem Ritzel (62) ermöglicht, sich relativ zu dem Nachstellschaft (46) zu drehen, wobei die Kupplungsfeder (69) das Ritzel und den Nachstellschaft abkoppelt, wenn das Ritzel (62) in einer Richtung gedreht wird, die zu der Richtung entgegengesetzt ist, in welcher Bremsennachstellung bewirkt wird.

4. Selbsttätige Spielnachstellvorrichtung nach Anspruch 3, dadurch gekennzeichnet, daß das Ritzel (62) eine Buchse (64) umfaßt, die sich von dem die Zähne (70) tragenden Teil des Ritzels (62) axial erstreckt, und der Nachstellschaft (46) eine komplementäre Buchse (68) trägt, wobei die Kupplungsfeder (69) eine Schraubenfeder ist, die um jede der Buchsen (64, 68) gewickelt ist.

5. Selbsttätige Spielnachstellvorrichtung nach irgendeinem der vorhergehenden Ansprüche, dadurch gekennzeichnet, daß eine Anti-Abwickel-kupplungsfeder (60) den Nachstellschaft (46) mit dem Gehäuse (12) verbindet, um Drehung des Nachstellschaftes (46) in Bremsennachstellrichtung zu ermöglichen, jedoch einer Drehung des Nachstellschaftes (46) in der entgegengesetzten Richtung zu widerstehen.

6. Selbsttätige Spielnachstellvorrichtung nach Anspruch 5, dadurch gekennzeichnet, daß die Anti-Abwickel-Kupplungsfeder (60) und die Kupplungsfeder (69), welche das Ritzel (62) mit dem Nachstellschaft (46) verbindet, Schraubenfedern sind, die Anti-Abwickel-Kupplungsfeder (60) in einer Richtung gewickelt ist, die zu der Richtung entgegengesetzt ist, in welcher die das Ritzel mit dem Nachstellschaft (46) verbindende Kupplungsfeder (69) gewickelt ist.

7. Selbsttätige Spielnachstellvorrichtung nach Anspruch 5, dadurch gekennzeichnet, daß der Nachstellschaft (46) in einer Bohrung (38) angebracht ist, die in dem Gehäuse (12) gebildet ist, ein Ende (44) des Nachstellschaftes (46) in einem Teil (40) verkleinerten Durchmessers der Bohrung (38) abgestützt ist, das genannte eine Ende (44) eine Gegenbohrung (58) hat, eine Buchse (42) in dem Teil (40) verkleinerten Durchmessers der Bohrung (38) angebracht ist, und die Anti-Abwickel-Kupplungsfeder (60) in der Buchse (42) angebracht ist und sich in die Gegenbohrung (58) erstreckt.

## Revendications

1. Un dispositif automatique de rattrapage de jeu pour un frein de véhicule actionné par un arbre menant rotatif (36) comprenant un carter-levier (12), des moyens (30) par lesquels ledit carter-levier est monté sur ledit arbre menant (36) pour entraîner ce dernier en rotation lors d'une action de freinage agissant sur l'orientation du carter-levier (12), un arbre de réglage (46) monté rotatif dans ledit carter-levier (12) et connecté en entraînement à l'arbre menant (36) pour entraîner ce dernier en rotation par rapport au carter-levier (12) afin d'effectuer un réglage du frein, un pignon denté (62) monté rotatif sur ledit arbre de réglage (46), une crémaillère (74) avec une surface de crémaillère faisant face radicalement vers l'intérieur en prise avec lui au pignon denté (62) et montée en va-et-vient par rapport audit carter-levier (12), des moyens (26) reliant de façon articulée la crémaillère (74) au carter-levier (12) pour produire ledit mouvement de va-et-vient, entraînant ainsi en rotation ledit pignon (62), et des moyens de couplage (64, 68, 69) pour connecter en entraînement ledit pignon (62) audit arbre de réglage (46), quand ce dernier est entraîné en rotation dans un sens effectuant le réglage du frein, ledit pignon (62) comportant une pluralité de dents d'engrenage (70) sensiblement équidistantes sur la périphérie du pignon (62), caractérisé en ce que ladite crémaillère (74) comporte une paire d'évidements (78, 80) qui reçoivent respectivement deux dents (70) de pignon adjacentes, laissant des distances entre les dents (70) et les évidements (78, 80), ce qui permet ainsi à la crémaillère (74) de se déplacer par rapport aux dents (70) sur une distance de jeu prédéterminée sans entraîner la rotation du pignon (62).

2. Un dispositif automatique de rattrapage de jeu selon la revendication 1, caractérisé en ce que les parties des dents (70) en prise avec la crémaillère (74) ont un profil en développante.

3. Un dispositif automatique de rattrapage de jeu selon la revendication 1, caractérisé en ce que lesdits moyens de couplage (64, 68, 69) comportent un ressort d'embrayage (69) reliant le pignon (62) avec l'arbre de réglage (46) pour l'entraîner en rotation, ledit ressort d'embrayage (69) couplant ledit pignon (62) pour entraîner en rotation ledit arbre de réglage (46) lorsqu'on fait tourner le pignon (62) pour effectuer un réglage du frein jusqu'à ce que l'on atteigne un niveau de couple prédéterminé à partir duquel ledit ressort d'embrayage (69) permet la rotation du pignon (62) par rapport à l'arbre de réglage (46), ledit ressort d'embrayage (69) découplant le pignon et l'arbre de réglage lorsqu'on fait tourner le pignon (62) dans le sens contraire à celui dans lequel s'effectue le réglage du frein.

4. Un dispositif automatique de rattrapage de jeu selon la revendication 3, caractérisé en ce que ledit pignon (62) comporte un manchon (64) s'étendant en direction axiale à partir de la partie du pignon (62) qui porte lesdites dents d'engrenage (70), et ledit arbre de réglage (46) porte un manchon supplémentaire (68), ledit ressort d'embrayage (69) étant un ressort à spirale enroulée autour de chacun desdits manchons (64, 68).

5. Un dispositif automatique de rattrapage de jeu selon l'une quelconque des revendications précédentes, caractérisé en ce qu'un ressort d'embrayage (60) d'anti-dégagement relie l'arbre de réglage (46) au carter (12) pour permettre la rotation de l'arbre de réglage (46) dans le sens effectuant le réglage du frein mais en s'opposant à la rotation dudit arbre de réglage (46) dans un sens opposé.

6. Un dispositif automatique de rattrapage de jeu, selon la revendication 5, caractérisé en ce que ledit ressort d'embrayage (60) d'anti-dégagement et le ressort d'embrayage (69) reliant le pignon (62) à l'arbre de réglage (46) sont l'un et l'autre des ressorts à spirale, ledit ressort d'embrayage (60) d'anti-dégagement étant enroulé dans un sens opposé au sens d'enroulement du ressort d'embrayage (69) reliant le pignon à l'arbre de réglage (46).

7. Un dispositif automatique de rattrapage de jeu, selon la revendication 5, caractérisé en ce que ledit arbre de réglage (46) est monté dans un alésage (38) défini à l'intérieur dudit carter (12), une extrémité (44) dudit arbre de réglage (46) étant supportée dans une partie (40) à diamètre réduit dudit alésage (38), cette extrémité (44) présentant un contre-alésage (58), un manchon (42) étant monté dans ladite partie (40) à diamètre réduit dudit alésage (38), ledit ressort d'embrayage (60) d'anti-dégagement étant monté dans ledit manchon (42) et se prolongeant dans ledit contre-alésage (58).

FIG. 1

FIG. 2